# EUROPÄISCHE PATENTANMELDUNG

(11) **EP 3 012 479 A1**
(43) Veröffentlichungstag der Anmeldung: **27.04.2016**
(21) Anmeldenummer: 15002905.6
(22) Anmeldetag: 12.10.2015
(51) Int. Cl.: F16F 1/38, F16F 1/40, F16F 3/087

(54) **ELASTISCHES MEHRKANTENLAGER FÜR WINDKRAFTANLAGEN**

(30) Priorität: 24.10.2014 EP 14003624; 13.12.2014 EP 14004210
(71) Anmelder: FM Energie GmbH & Co. KG, 64646 Heppenheim (DE)
(72) Erfinder: Mitsch, Franz, 64646 Heppenheim (DE)
(74) Vertreter: Benz, Jürgen

(57) **Zusammenfassung**

Die Erfindung betrifft ein Lager, welches aufgrund seiner Geometrie und materiellen Eigenschaften eine in allen Richtungen hohe radiale Steifigkeit bei gleichzeitiger geringer Torsionssteifigkeit aufweist, und somit insbesondere für den Einsatz in Windkraftanlagen geeignet ist.

## Beschreibung

Die Erfindung betrifft ein Lager, welches aufgrund seiner Geometrie und materiellen Eigenschaften eine in allen Richtungen hohe radiale Steifigkeit bei gleichzeitiger geringer Torsionssteifigkeit aufweist. Es vermag somit torsionale Kräfte und Schwingungen, welche sich insbesondere in auftretendem Körperschall bemerkbar machen, zu dämpfen und zu eliminieren, während es ausreichend hart ist, um radialen Kräfte, wie sie beispielsweise bei Gier- und Nickbewegungen sich drehender Antriebswellen auftreten, standzuhalten und entgegenzuwirken.

Das erfindungsgemäße Lager kann daher insbesondere im Zusammenspiel mit einem Hauptlager als Zweipunktlager oder als Mehrpunktlager überall dort eingesetzt werden, wo torsionale Schwingungsereignisse störend wirken, wie dies beispielsweise bei Windkraftanlagen der Fall ist. So kann es beispielsweise zwischen Hauptlager und Getriebe montiert werden, um den vom Getriebe erzeugten Körperschall zu eliminieren.

Bei den bekannten Dreipunktlagerungen von mit Getriebe ausgestatteten Windkraftanlagen werden die aus Nick-Momenten, Gier-Momenten und Antriebsmomenten resultierenden Lasten und Kräfte auf zwei Lagerbuchsen übertragen und von diesen kompensiert, welche üblicherweise beiderseits vom Getriebe angeordnet sind. Eine drittes Lager vor dem Getriebe hält und führt die Antriebs- bzw. Rotorwelle. Diese Dreipunktlagerung, die nach dem Stand der Technik mit elastischen Buchsen betrieben wird, ist in radialer Richtung, wie erforderlich, relativ steif, wodurch sie durch kleinere elastische Verformungen sowohl Antriebsmomente als auch Momente aus Nick- und Gierbewegungen aufzunehmen vermögen. Derartige im Stand der Technik bekannten Dreipunktlagerungen besitzen jedoch auch in torsionaler Richtung eine beträchtliche Steifigkeit, so dass dadurch an der Welle oder Achse auftretende Torsionskräfte und hierdurch vermittelte Schwingungen im hörbaren Bereich (Körperschall) nicht ausreichend von den üblichen Buchsen aufgenommen werden können. Körperschall auch vom Getriebe entsteht vor allem in torsionaler Richtung, so dass es wünschenswert erscheint, die Steifigkeit der verwendeten Lager in eben dieser torsionalen Richtung zu verringern, ohne dass dabei die erforderliche verhältnismäßig hierzu größere radiale und ggf. auch axiale Steifigkeit, welche für die Aufnahme der anderen genannten Kräfte und Lasten erforderlich ist, ebenfalls nennenswert zu erniedrigen.

Es bestand somit die Aufgabe, eine elastisches Lager zu entwickeln, welches in radiale und ggf. auch axialer Richtung ausreichend steif ist, in torsionaler Richtung jedoch weich genug ist, um torsionale Schwingungen, insbesondere Körperschallschwingungen ausreichend zu reduzieren oder gar vollständig zu eliminieren.

Ein derartiges Lager wird erfindungsgemäß wie im Folgenden und den Ansprüchen näher beschrieben, zur Verfügung gestellt.

Das erfindungsgemäße elastische Lager ist in der Weise konstruiert, dass es bei Einsatz in einer Windkraftanlage oder anderen angetriebenen Maschinen in unmittelbarer Nachbarschaft zum Getriebe, vorzugsweise stirnseitig zum Getriebe in Richtung Rotor oder Antrieb, angebracht werden kann.

Wesentliches Merkmal der erfindungsgemäßen Lagerung ist, dass sie im Wesentlichen aus zwar aus einem scheibenförmigen Bauteil besteht, welches jedoch im funktionellen Bereich ein Vielkant oder Vieleck von besonderer Geometrie ist, wodurch im Wesentlichen rechteckige Zwischenräume, entstehen, die konzentrisch um den Mittelpunkt des Lagers angeordnet sind, ebenso wir die zentrale Bohrung, durch welche der Triebstrang oder die Rotorwelle geführt ist, an der weitgehend die Kräfte aus Gier- und Nickbewegungen der Maschine bzw. des Rotors angreifen. Die so entstehende Vielzahl von konzentrisch angeordneten Zwischenräumen von kubischer oder in besonderen Ausführungsformen auch konischer oder halb-konischer Gestalt enthalten passend elastische Schichtfederelemente, die bei ihrem Einbau eine Vorspannung erhalten, die den zu erwartenden torsionalen Kräften, welche hauptsächlich aus dem Getriebe oder einem Antriebsaggregat herrühren, entgegenwirkt. Durch diese elastische ringförmige Anordnung von eckigen Schichtfederelementen, können, insbesondere dann, wenn sie einen flachen Anstellwinkel zur Achse des Lagers aufweisen, nicht nur torsional angreifende Schwingungen beruhigt werden, sondern auch die anderen radial und axial angreifenden Kräfte, welche vor allem bei Windkraftanlagen unter Last und im Wind auftreten. Somit können erfindungsgemäß sogar unter bestimmten Bedingungen die klassischen Dreipunktlager durch Zweipunktlager ersetzt werden, was Material, Platzbedarf und Gewicht einspart, und somit einen weiteren Vorteil neben der erreichten Körperschalldämpfung darstellt. Gegenüber konventionellen Systemen kann so die Torsionssteifigkeit bei ansonsten unveränderten Größenordnungen um den Faktor 2 - 4 reduziert werden, was zu einer signifikanten Körperschallentkopplung führt. Die Übertragung des Torsionsmoments erfolgt erfindungsgemäß über Schubverformung und gleichzeitig aufgrund der vieleckigen Anordnung auf Druckbelastung der beteiligten Elemente.

Gegenstand der Erfindung ist somit ein elastisches Lager, welches folgende technische Merkmale umfasst:
(i) ein inneres scheibenförmiges Viel-Eck-Bauteil (2), welches mit einer konzentrisch angeordneten Öffnung zur Aufnahme einer Antriebswellenvorrichtung (21, 24), beispielsweise einer Rotorwelle einer Windkraftanlage, deren Längsachse eine gedachte zentrale Achse (a) bildet, und mit einer mehrkantigen Außenkontur aus flachen Seitenkantenflächen (2.1) ausgestattet ist, welche vorzugsweise senkrecht zum Radius des Bauteils (2) angeordnet sind,
(ii) eine äußeres mit dem Maschineträger (10) in Verbindung zu bringendes Bauteil (1) mit scheibenförmigen Querschnitt, welches eine mit einer im Vergleich zum Außendurchmesser des inneren Bauteils (2) größeren konzentrisch angeordneten Öffnung versehen ist, wobei diese Öffnung eine mehrkantige Innenkontur aus flachen Seitenkantenflächen (1.1) aufweist, welche vorzugsweise senkrecht zum Radius des Bauteils (2) angeordnet sind, und Anzahl, Geometrie und Anordnung der Seitenkantenflächen (1.1), im Wesentlichen den Seitenkantenflächen der Außenkontur des inneren Bauteils (2) entsprechen, und ferner
(iii) elastische Schicht- oder Sandwich-Federelemente (3), welche bezüglich Anzahl, Geometrie und Anordnung im Wesentlichen der Anzahl, Geometrie und Anordnung der äußeren und inneren Seitenkantenflächen der Bauteile (1)(2) entsprechen, und welche bzw. deren ein oder mehrere Schichten, so angeordnet sind, dass sie einen senkrechten Winkel zum Radius des inneren und äußeren Bauteil (2)(1) in Bezug auf den Mittelpunkt der jeweiligen konzentrischen Öffnung bilden, wobei die Schichtfederelemente eine Dicke aufweisen, die im Wesentlichen der Differenz des Innendurchmessers des Bauteils (1) und des Außendurchmessers des Bauteils (2) entspricht,
wobei das innere Vieleck-Scheibenteil (2) in die konzentrische Öffnung des äußeren Bauteils (1) so gesteckt und platziert ist, dass die Seitenkantenflächen (2.1) gegenüber den vorzugsweise gleichgroßen Seitenkantenflächen (1.1) angeordnet sind, so dass durch den Abstand zwischen dem konzentrisch gestalteten Außenvieleckprofil des inneren Bauteils (2) und dem konzentrisch gestalteten Innenvieleckprofil des äußeren Bauteils (1) konzentrisch angeordnete, eckige Zwischenräume (16) entstehen, in denen besagte Schichtfederelemente (3) passend und vorgespannt untergebracht sind, und wobei weiterhin das äußere Bauteil (1) und das innere Bauteil (2) über besagte elastische Schichtfederelemente (3) gegeneinander in radialer Richtung verspannt sind.

Das äußere Bauteil (1) steht nach Einbau in die zu dämpfende Anlage oder Maschine fest in Verbindung mit dem Maschineträger (10). Dies kann durch Verschraubung oder ähnlicher Verbindungsmittel erreicht werden. Es kann aber auch zweckmäßig sein, Bauteil (1) als integralen Teil des Maschineträgers zu konzipieren, also zum Beispiel als einheitliche Gussform.

Bauteil (2) ist erfindungsgemäß vorgesehen, mit dem vor allem Torsionsschwingungen erzeugenden Aggregate der Anlage verbunden zu werden. Diese ist in der Regel ein Getriebe oder ein Motor. Somit weist das Bauteil (2) Befestigungsvorrichtungen (27), verzugsweise Schraubverbindungen, auf.

Zwischen dem Bauteil (1) mit seinem Vieleck-Innenprofil und dem Bauteil (2) mit seinem entsprechenden Vieleck-Außenprofil befinden sich besagte elastische Schichtfederelemente (3), die in die dafür vorgesehenen Räume zwischen dem äußeren (1) und inneren Bauteil (2) unter Erzielung einer Vorspannung passgenau eingebracht sind. Bei den Vielecken-Bauteilen handelt es sich erfindungsgemäß bevorzugt um Bauteile mit regelmäßigen Vielecken.

Die Schichtfederelemente (3) bestehen im einfachsten Fall aus jeweils zwei unelastische Platten, beispielsweise aus Metall, die durch eine elastische Schicht aus Gummi oder elastischem Polymermaterialien in der Regel durch Vulkanisierung oder Verklebung miteinander verbunden sind. Vorzugsweise weisen sie jedoch zwei, drei, vier oder mehr Schichten auf, welche durch Zwischenbleche oder unelastische Zwischenplatten voneinander getrennt sind. Derartige Schichtfederelemente sind im Stand der Technik hinreichend bekannt.

Die Dicke der Schichtfederelemente und damit auch notwendigerweise die Dicke der durch die Geometrie und Dimensionen der Bauteile (1)(2) bedingten Zwischenräume (16) richtet sich nach der Größe der Anlage und der erforderlichen Dämpfung. Für eine Windkraftanlage mittlerer Größe werden Schichtfederelemente mit einer Dicke beispielsweise zwischen 5 und 15cm eingesetzt. Entsprechend sind dann die Bauteile (!) und (2) dimensioniert.

Überraschenderweise wurde gefunden, dass die Anzahl der Ecken der Bauteile (1) und (2) einen Einfluss auf die gewünschte Körperschallentkopplung und ggf. die Dämpfung in axialer und radialer Richtung besitzt. So ist die entsprechende Dämpfung torsionaler Schwingungsereignisse besonders signifikant, wenn die Anzahl der Ecken im äußeren Bauteil (1) (Innenvieleck) und im inneren Bauteil (2) (Außenvieleck) zwischen acht und zwölf ist. Besonders gute Ergebnisse erhält man mit Zehnkanten-Bauteilen, unabhängig von Variationen in den Dimensionen der Bauteile. Sowohl bei niedrigerer Anzahl (< 8) als auch höherer Anzahl von Ecken (>14) verschlechtern sich die Torsions- und Gesamt-Dämpfungseigenschaften des Schwingungssystems zum Teil deutlich.

Gegenstand der Erfindung ist somit auch ein entsprechendes elastisches Lager bei dem die Außenkontur des Bauteils (2) und die Innenkontur des Bauteils (1) jeweils ein regelmäßiges Achteck, Neuneck, Zehneck, Elfeck oder Zwölfeck ist. Vorzugsweise wird erfindungsgemäß ein Lager eingesetzt, bei dem die Außenkontur des Bauteils (2) und die Innenkontur des Bauteils (1) jeweils ein regelmäßiges Zehneck ist.

In der Regel ist erfindungsgemäß vorgesehen, die elastischen Schichtfederelemente (3) in die sonst fertige, d.h. mit den Bauteilen (1) und (2) versehene Anlage einzubauen zu können, auch wenn dies nicht zwingend erforderlich ist. Ein Einbau und Ausbau der dem Verschleiß besonders ausgesetzten Schichtfederelemente (3) in eine bestehende Anlage ist aber sehr wünschenswert. Daher weisen die erfindungsgemäßen Lager auch Elemente auf, die einen solchen Einbau bzw. Ausbau ermöglichen, ohne dass hierfür besonders hohe Kräfte und damit Werkzeuge, die solche Kräfte aufbringen können, eingesetzt werden müssen. Auch sollten bei Ein- und Ausbau Beschädigungen vermieden werden.

Gegenstand der Erfindung ist somit ein entsprechendes elastisches Lager bei dem die elastischen Schichtfederelemente (3) entsprechend gestaltete Elemente und Vorrichtungen (15) aufweisen, mittels derer sie in die von den gegenüberliegenden Kantenflächen (1.1)(2.1) gebildeten Zwischen- bzw. Einbauräumen (16) eingeschoben oder aus diesen heraus gezogen werden können. Solche Elemente können beispielsweise Bohrungen oder Halterungen sein, die in überkragenden Bereichen der Bleche bzw. Platten der Schichtfederelemente (3) vorgesehen sind. Mit Hilfe dieser Bohrungen oder Halterungen können dann mittels von geeigneten Werkzeugen in die Zwischenräume (16) der Bauteile (1)(2) eingeschoben oder herausgezogen werden.

Um dies noch weiter zu erleichtern können die erfindungsgemäßen Lager in einer weiteren Ausführungsform der Erfindung modifiziert sein. So können die Schichtfederelemente (3) keilförmig bzw. konusförmig sein mit unterschiedlicher Schichtdicke. Dies kann erreicht werden, in dem sie im nicht vorgespannten Zustand an der Kantenfläche, mit der sie in die jeweiligen Zwischenräume (16) bei Montage eingeschoben werden, von geringerer Dicke sind als die Dicke des jeweiligen Zwischenraumes (16), und an der gegenüberliegenden Kantenfläche eine Dicke aufweisen, die größer ist als die Dicke des jeweiligen Zwischenraumes (16), so dass bei jeweils vollständig in den jeweiligen Zwischenraum eingeschobenen Schichtfederelement die elastischen Schichten eines Elementes im Wesentlichen wieder gleich dick sind, wodurch mittels Dehnung und Pressung der betroffenen Elastomerschichten eine Vorspannung des Schichtfederelementes erzielt wird. Gegenstand der Erfindung ist somit ein entsprechendes Lager, bei dem die Schichtfederelemente (3) an der Kantenfläche mit der sie in die jeweiligen Zwischenräume (16) bei Montage eingeschoben werden eine Dicke aufweisen, die geringer ist als die Dicke des jeweiligen Zwischenraumes (16), und an der gegenüberliegenden Kantenfläche eine Dicke aufweisen, die größer als die Dicke des jeweiligen Zwischenraumes (16), so dass bei jeweils vollständig in den jeweiligen Zwischenraum eingeschobenen Schichtfederelement eine Vorspannung desselben erzielt wird.

Ein erleichterter Ein- und Ausbau kann aber auch durch keilförmige oder konusförmige Schrägung einer der beiden Seitenkantenflächen (1.1)(2.1) der Zwischenräume (16) in der Weise erfolgen, dass die jeweiligen Kanten, auf der Seite, auf der das Schichtelement eingebaut oder ausgebaut werden soll, einen größeren Abstand voneinander haben als das Schichtelement (3) dick ist.

Gegenstand der Erfindung ist somit ferner ein erfindungsgemäßes Lager, bei dem die Zwischenräume (16) auf der Seite von welcher die Schichtfederelemente (3) bei Montage eingeschoben werden, eine größere Dicke aufweisen als auf der gegenüberliegenden Seite, so dass bei jeweils vollständig in den jeweiligen Zwischenraum eingeschobenen Schichtfederelement eine Vorspannung desselben erzielt wird.

In der Standardausführungsform der Erfindung ist in einem Zwischenraum (16) ein durchgehendes Schichtelement (3) passgenau vorgesehen.

In einer anderen Ausführungsform der Erfindung sind zwei oder ggf. mehr Schichtelemente vorgesehen, die durch einen oder mehrere Trennräume voneinander getrennt sind, wobei der Trennraum oder die Trennräume Zwischenraum in axialer Richtung angeordnet ist. Durch diesen Trennraum ist es möglich, bei nur geringfügigen oder gar keinen Einbußen an torsionaler Dämpfungsfähigkeit, eine deutlich geringere Kraft beim Ein- und Ausbau der Schichtfederelemente (3) aufzuwenden. Gegenstand der Erfindung ist somit auch ein elastisches Lager, bei dem in dem Zwischenraum (16) zwei oder mehr Schichtelemente (3) vorliegen, die durch axial ausgerichtete Trennräume voneinander getrennt sind.

Ein ähnlicher Effekt bezüglich Krafteinsparung bei der Montage des erfindungsgemäßen Lagers kann erzielt werden, wenn die Schichtfederelemente (3) mittig oben und / oder unten eine geringere Schichtdicke aufweisen, so dass es zur Ausbildung einer mittigen ein- oder beidseitigen Delle kommt. Gegenstand der Erfindung ist somit auch ein elastisches Lager bei dem die Schichtfederelemente (3) in Richtung der gedachten Achse (a) gesehen mittig einseitig oder beidseitig eine Delle aufweisen, so dass sie Dicke der Elemente in der Delle geringer ist als an den Außenrändern.

In einer Ausführungsform der Erfindung sind die erfindungsgemäßen Lager so gestaltet, dass die Schichten der Schichtfederelemente, die konzentrisch um den Mittelpunkt der Bohrungen oder Öffnungen der das Lager bildenden Bauteile (1)(2) angeordnet sind, jeweils planparallel zu der gedachten Achse (a) des erfindungsgemäßen Lagers ist, wobei diese Achse gleichzeitig die Achse des durch das Lager geführten Triebstranges ist. In diesem Fall bilden die Flächen der Schichtfederelemente also im Wesentlichen immer einen 90°-Winkel mit dem Lot auf diese gedachte Achse (a). Dasselbe gilt für die Zwischenräume (16), welche besagte Schichtfederelemente enthalten. Gegenstand der Erfindung ist somit ein entsprechendes elastisches Lager bei dem die Seitenkantenflächen (1.1)(2.1) der Bauteile (1) und (2), die die Zwischenräume (16) für die Schichtfederelemente (3) bilden, planparallel zueinander und parallel zu der gedachten zentralen Achse (a) des Lagers ausgerichtet sind ebenso wie die in besagte Zwischen- bzw. Einbauräume eingebrachten Schichtfederelemente (3).

In einer anderen Ausführungsform der Erfindung sind die Lager so gestaltet, dass die Flächen der Schichtfederelemente und somit auch die Zwischenräume (16) nicht parallel zu der gedachten Achse (a) sind, sondern einen Winkel mit besagter Achse bilden, der 2 - 20%, vorzugsweise 2 - 10%, insbesondere 3 - 5% beträgt. Der Winkel kann dabei nach vorne offen sein, also in Richtung des Triebstranges bzw. Rotors (im Falle einer Windkraftanlage) oder aber in Richtung des Getriebes oder Antriebsaggregates, welches torsional gedämpft werden soll. Vorzugsweise ist der Winkel nach vorne offen. Gegenstand der Erfindung ist daher ein elastisches Lager bei dem die Seitenkantenflächen (1.1)(2.1) der Bauteile (1) und (2), die die Zwischenräume (16) für die Schichtfederelemente (3) bilden, planparallel zueinander ausgerichtet sind und einen Winkel, vorzugsweise zwischen 1 - 10°, insbesondere 1 - 5° mit der gedachten zentralen Achse (a) des Lagers bilden ebenso wie die in besagte Zwischenräume eingeführten Schichtfederelemente (3). Lager mit derartigen Winkeln der Schichtfederelemente (3) weisen noch eine ausreichen hohe und gute Dämpfung torsionaler Schwingungen auf.

In einer weiteren Ausführungsform der Erfindung besitzt das erfindungsgemäße Lager Vorrichtungen zur Dämpfung von Kräften die durch den Rotorschub auftreten. Dazu ist es zusätzlich mit beispielsweise zwei bis acht vorzugsweise zwei bis vier, insbesondere zwei weiteren Schichtfederelementen (31) ausgestattet, welche am Umfang des inneren Bauteils (2) vorzugsweise auf der dem Getriebe (nach Einbau) gegenüberliegenden Seite angebracht sind und Vorspannvorrichtungen aufweisen, mit deren Hilfe das innere Bauteil (2) in axialer Richtung gegenüber dem Maschinenträger (10) bzw. dem mit dem Maschineträger fest verbundenen äußeren Bauteil (1) verspannt werden kann, so dass diese Elemente Kräfte aus dem Rotorschub oder ähnliche Kräfte aufnehmen können. Gegenstand der Erfindung ist ein entsprechendes elastisches Lager, welches zusätzlich mindestens zwei Schichtfederelemente (31) am Umfang des inneren Bauteils (2) aufweist, welche über einen Flansch (37) mit dem Maschineträger (10) oder mit dem äußeren Bauteil (1) fest verbunden sind, und die Schichtfederelemente (31) Mittel zur Kraftübertragung (35) und Vorspannung (36, 38, 39) aufweisen, mit welchen das innere Bauteil (2) gegen den Maschinenträger (10) bzw. gegen das äußere Bauteil (1) in Richtung der gedachten Achse (a) axial verspannt werden kann. Diese Ausführungsform kann, wie oben bereits für andere Ausführungsformen beschrieben, weiter in der Weise abgewandelt werden, dass die Seitenkantenflächen(1.1)(2.1) der Bauteile (1) und (2), die die Zwischenräume (16) für die Schichtfederelemente (3) bilden, so wie die Flächen der Schichtfederelemente (3) selbst, planparallel zueinander ausgerichtet sind und einen vorzugsweise flachen Winkel zwischen zwei und 10° mit der gedachten zentralen Achse (a) des Lagers bilden ebenso wie die in besagte Zwischenräume eingeführten Schichtfederelemente (3).

Gegenstand der Erfindung ist auch ein Zwei- oder Mehrpunktlager umfassend ein Hauptlager und mindestens ein elastisches Lager wie oben, im Folgenden und in den Ansprüchen näher beschrieben.

Das erfindungsgemäße Lager kann überall dort eingesetzt werden, wo hohe Drehmomente bei hohe Radialsteifigkeit torsional weich übertragen werden müssen. Das könnten zum Beispiel auch ein Scheiben-oder mehr Scheiben-Kupplungen sein welche radial steif und torsional weich sein müssen, so zum Beispiel schnell drehende Kupplungen, die aufgrund von Unwucht mit hoher radialer Steifigkeit zentriert werden müssen.

Besondere Verwendung finden die erfindungsgemäßen Lager in Windkraftanlagen oder Anlagen mit einem Triebstrang und einem Getriebe und oder Antriebsaggregat.

Gegenstand der Erfindung ist somit die Verwendung der erfindungsgemäßen Lager
- in Zwei- oder Mehrpunktlagern;
- zur Dämpfung und Reduzierung torsionaler Kräfte und Schwingungen, insbesondere Körperschall;
- zur Aufnahme von torsionalen Kräften und Schwingungen, die durch Nick- und Gierbewegungen sowie durch Schubkräfte auftreten, insbesondere Rotorschub in Windkraftanlagen auftreten.

Letztlich ist Gegenstand der Erfindung eine Windkraftanlage, welche ein erfindungsgemäßes Lager aufweist.

Im Folgenden werden die im Text und den Abbildung verwendeten Bezugsgrößen näher erläutert:
1. Äußeres Bauteil mit scheibenförmigen Querschnitt und konzentrischer Mehrkantenprofil-Öffnung
   1.1 Seitenkantenfläche des Bauteils (1)
2. Inneres scheibenförmiges Bauteil mit Vielkantaußenprofil und mit konzentrischer runder Öffnung
   2.2 Seitenkantenfläche des Bauteils (2)
3. Elastisches Schichtfederelement
4. Einbau-Richtung
5. Einbauwinkel
6. Einbauwinkel der Einzel-Schicht
7. Umgebungs-Einbauwinkel
8. Übergangs Flansch am Getriebe
9. Ausbau-Richtung
10. Maschinenträger
11. Außen-Blech 1
12. Außen-Blech 2
13. Zwischenbleche
14. Elastomer-Schichten
15. Bohrungen zum axialen Ausziehen der Elemente
16. Zwischenraum zwischen Außenvielkant und Innenvielkant zum Einbau der Schichtfederelemente (3)
17. Antriebswelle
18. Hauptlager ausgeführt nach dem Stand der Technik
19. Getriebe
20. Ausgangswelle des Getriebes, rotieren
21. Spalt zwischen Welle, 21 und Innen-Vielkant, Position 2
22. Wellenverschraubung
23. Getriebe Befestigung
24. Winkel zwischen Schichtfederelemente (3) und der Achse (a)
25. Winkel (29) zwischen Außen- bzw. Innenkontur der Bauteile 1() und (2) und damit der Schichtfederelemente (3) und dem Radius der ineinander gesteckten Bauteile (1) und (2)
26. Anstellwinkel gegenüber Außenkontur/Innenkontur der Bauteile (1)(2) zur Aufnahme der Schubkräfte
27. Sandwich-Federelement
28. Element zur Vorspannung des Sandwich Federelementes (31)
29. Elastomer Schichten des Sandwich Federelementes (31)
30. Zwischenbleche des Sandwich Federelementes (31)
31. Druckstück zur Kraftübertragung
32. vorspannen Element zur Vorspannung des Sandwich Federelementes (31)
33. am Maschinenträger an gegossener oder befestigter Flansch zur Aufnahme der Schubkräfte
34. Vorspannschraube
35. Gewinde zur Vorspannung

Im Folgenden werden die im Text und den Abbildung verwendeten Bezugsgrößen näher erläutert:

| | |
|---|---|
| Abb. 1: | Lagereinheit bestehend aus zehn Elastomerelementen |
| Abb. 2: | Detailzeichnung der Einbausituation der Elastomerelemente |
| Abb. 3: | Zusammensetzung von Schub-und Druckspannung an den Elastomerelementen |
| Abb. 4: | Lagersystem in einer Windkraftanlage mit Dreipunktlagerung, bei der die Lasten aus dem Rotorschub über das Hauptlager übertragen werden, |
| Abb. 5: | Lagersystem einer Windkraftanlage mit Dreipunktlagerung bei der die Schublasten vom Getriebelager aufgenommen werden |
| Abb. 6: | Details zu Bild 5 |
| Abb. 7: | Lagereinheit mit Schichtelement, welches mittig eine geringere Dicke aufweist als an den Rändern |
| Abb. 8 - 14 | Weitere Ausführungsformen des erfindungsgemäßen Lagers |

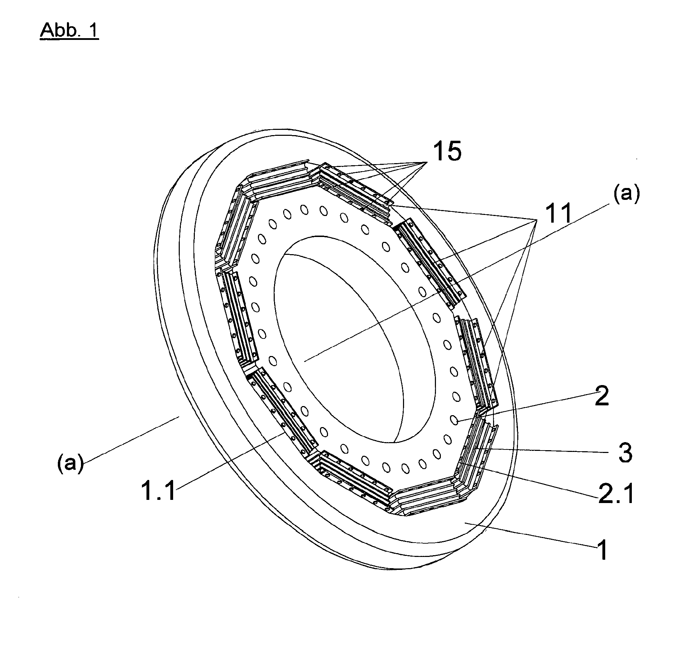

Die Abbildungen 1 - 4 und 7 stellen die Standardvariante des erfindungsgemäßen Lagers dar.

Abb. 1 zeigt ein erfindungsgemäße Lager bestehend aus einem inneren scheibenförmigen Bauteil mit zehn regelmäßigen Ecken als Außenkontur und einem entsprechend angeordneten äußeren scheibenförmigen Bauteil mit zehn regelmäßigen Ecken als Innenkontur, wobei ein Zwischenraum (16) eingehalten wird, in dem die Schichtfederelemente (3) passend eingebettet sind, wobei diese Schichtfederelemente so vorgespannt sind, dass sie die beiden scheibenförmigen Bauteile (1) und (2) miteinander fest verspannen und somit zusammenhalten.

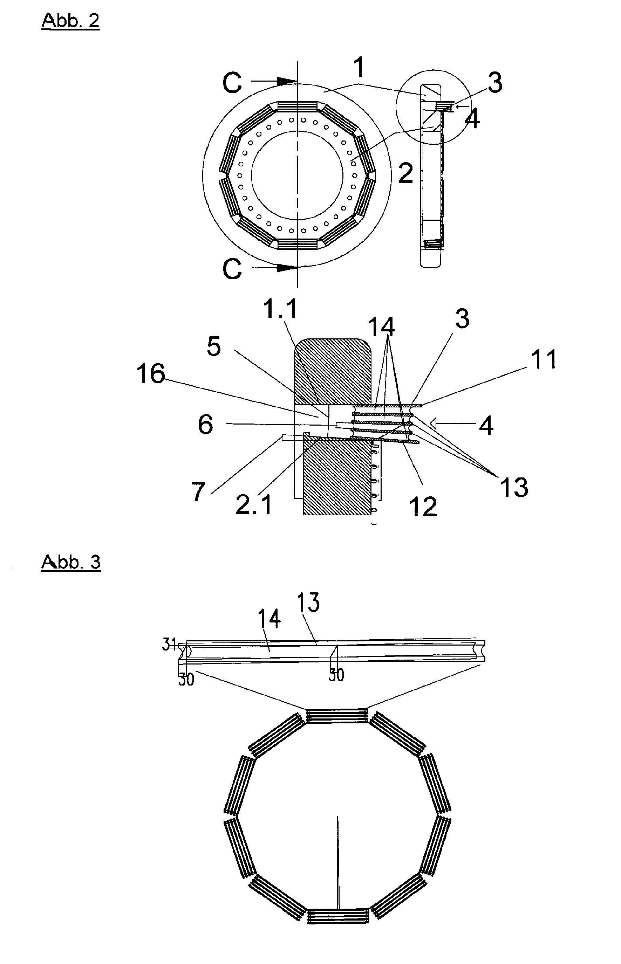

Abb. 2 zeigt, wie die zu verspannenden Schichtfederelemente (3) in den Zwischenraum eingeschoben werden. Hierbei kann zu besseren Verspannung eine Konturfläche (1.1) (2.1) einen Winkel in Richtung der gedachten Achse (a), beispielsweise zwischen 1 und 10°, vorzugsweise zwischen 1 - 5°, gegenüber der gegenüberliegenden Konturfläche (2.1)(1.1) aufweisen.

Abb. 3 zeigt, dass bei der Bewegung in Torsionsrichtung eine Schub-Verformung (30) über die gesamte Länge der Elemente auftritt. Gleichzeitig erfolgt eine Druck-Verformung die in der Mitte der Elemente Null ist und nach außen kontinuierlich zunimmt, so dass am Ende der Elemente die größte Druckverformung erfolgt. Einen wesentlichen Anteil der Steifigkeit wird durch den Druck-Verformung erreicht, d.h. bei Verwendung von vielen relativ kurzen Elastomer-Elementen am Umfang wird eine geringere Steifigkeit erreicht als bei der Verwendung weniger, und längerer Elemente. Bei der Verwendung von zehn Elementen (bevorzugt) ist der Anteil aus der Drucksteifigkeit entsprechend ähnlich der Schubsteifigkeit. Die Schubsteifigkeit ist weniger schädigend für das Elastomer als die Drucksteifigkeit. Deshalb soll die Schubsteifigkeit möglichst gewählt werden. Bei Verwendung reiner Schubsteifigkeit ist eine große Bauteillänge und ein großer Durchmesser erforderlich. Außerdem führen reine Schubsteifigkeiten zu einer hohen axialen Steifigkeit, die aufgrund der im Hauptlager möglichen axialen Bewegung der Rotorwelle zu hohen axialen Rückstellkräften, die das Getriebe belasten, führen würde.

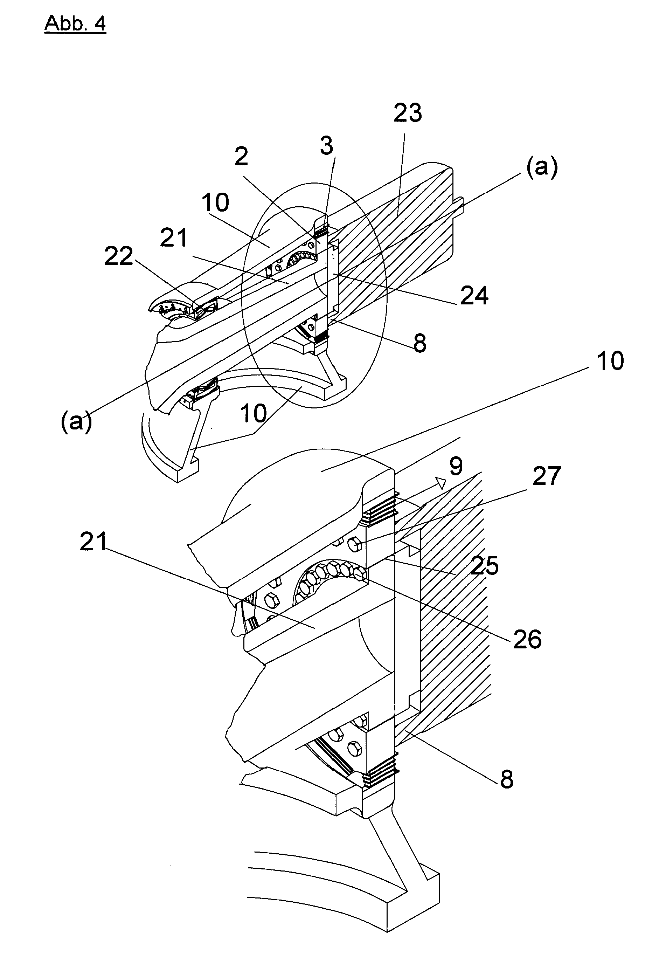

Abb. 4: zeigt ein Lagersystem in einer Windkraftanlage mit Dreipunktlagerung, wobei das erfindungsgemäße Mehrkantenlager zwischen Getriebe und Rotorwelle am Maschinenträger angeordnet ist.

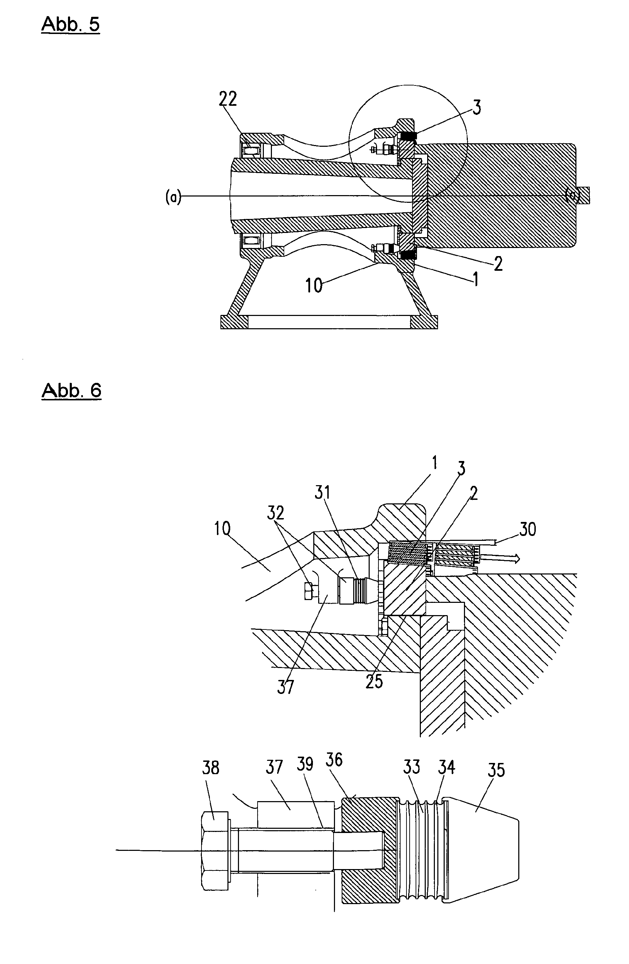

Abb. 5 und 6 beschreiben weitere Varianten oder Ausführungsformen, welche eine weitere technische Funktion zum Gegenstand haben. Die im Vergleich zu Gier-Kräften, Nick-Kräften und Torsionskräften relativ kleine Kraft aus Rotorschub in axialer Richtung wird hierbei vom Hauptlager übertragen. Das Hauptlager wäre jedoch ohne diese Lasten deutlich einfacher zu realisieren. Das Hauptlager kann damit als kardanisch bewegliches Radiallager (40) ohne axiale Abstützung ausgeführt werden. Bei Verwendung der oben beschriebenen Lagerung bedarf es nur einen geringen Aufwand die Schubkräfte mit zu übertragen. Damit die Schubkraft übertragen werden kann, können die Elastomerelemente (3) mit einem leichten Anstellwinkel (28) gegenüber der Längsachse (a) des Lagers eingebaut werden. Dabei reicht ein Winkel zwischen 1 oder 2° und 10°, vorzugsweise 3-5° aus um die axialen Kräfte zu übertragen. Die Elemente können auch konisch mit einem Konuswinkel (28) gestaltet sein. Der Einbauraum (16) für die Elemente, bzw. die Seitenkantenflächen der Bauteile (1) und (2) ist/sind dann ebenfalls mit dem gleichen Konuswinkel ausgeführt. Da die Kräfte nicht nur vom Rotor auf das Getriebe ausgeführt werden, sondern sich bei besonderen Lastfällen auch umkehren muss ein Zurückfedern der elastischen Lagerung bei Schubumkehr gewährleistet sein. Zu Übertragung des Umkehrschubs werden deshalb mehrere Sandwich-Federelemente (31), mindestens zwei Stück, vorzugsweise drei bis fünf, am Umfang angebracht. Damit wird der Außen-Vielkant (2) in axialer Richtung gegen den Maschinenträger (10) bzw. das mit ihm verbundene äußere Bauteil (1) abgestützt. Die Sandwich-Federelemente (31) werden gegen die Elastomer-Elemente (3) verspannt. Dazu werden die Sandwichelemente mit dem am Maschinenträger befestigten Flansch (37) verspannt. Mit den vorzugsweise mehreren Vorspannschrauben (38) und dem Gewinde (37) werden die Sandwichelemente (31) beispielsweise über ein Druckstück (36) verspannt. Zum Ausbau der Schichtfederelemente (3) werden zuerst die Sandwichfederelemente (31) entspannt. Somit sind zum Herausziehen der Schichtfederelemente (3) aufgrund der geringeren Pressung geringere Kräfte erforderlich. Das Sandwichelement, (31) besteht aus mehreren Elastomerschichten (33) welche durch Zwischenbleche oder unelastische Zwischenplatten (34) getrennt sind. Somit haben diese Bauteile eine geringer radiale Steifigkeit bei einer gleichzeitig hohen axialen Steifigkeit. Die Dicke der Elemente ist so gewählt, dass diese sich über etwa die halbe Länge bzw. Breite einschieben lassen, bevor sie anfangen zu gleiten. Der Konuswinkel (28) ist so gewählt, dass beim Einschieben der restlichen Tiefe des Federelements eine Vorspannung der Elastomerschichten (14) von etwa 5 % der Ursprungsdicke entsteht. Beim Einschieben werden die äußeren Bleche (11)(12) der Elemente mit einer Vorrichtung axial eingepresst. Zum Herausziehen haben vorzugsweise die äußeren Bleche mehrere Bohrungen oder Halterungen, an denen eine Zugvorrichtung angreifen kann. In besonderen Fällen müssen auch die Zwischenbleche (13) analog der Außenbleche verlängert und mit Bohrungen oder Halterungen versehen werden, so dass noch größere Auszugskräfte zum Überwinden der Haftreibung möglich sind. Bei der Ausführungsform mit den zusätzlichen Schichtfederelementen (31) besteht der Vorteil, dass beim Entspannen derselben bereits eine teilweise Entlastung der Pressung erfolgt.

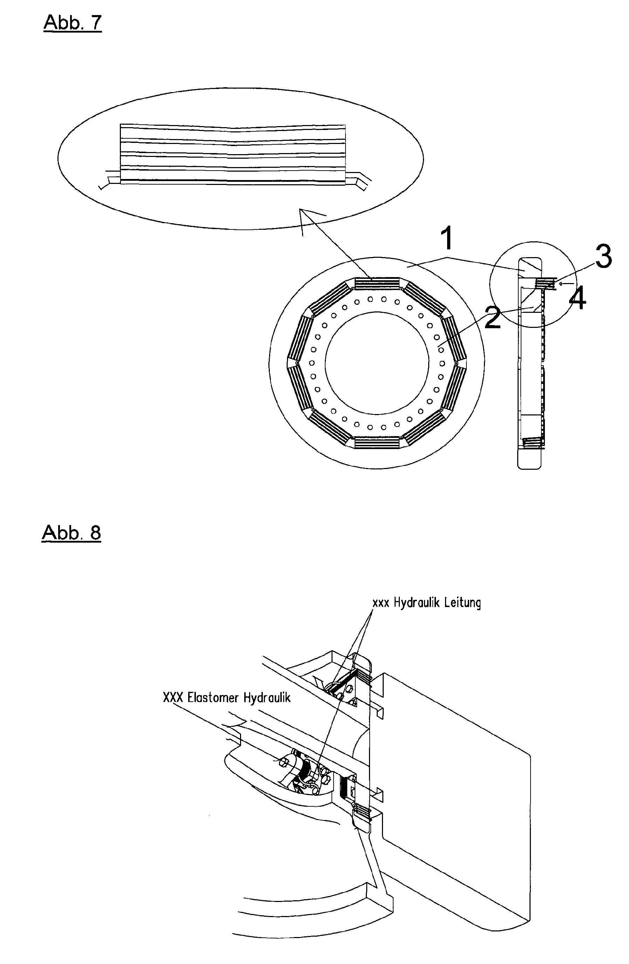

Abb. 7 zeigt eine erfindungsgemäße Ausführungsform, welche Schichtfederelemente (3) mit einer mittigen Delle aufweisen, so dass die Dicke dieser Elemente an den Außenrändern größer ist als in der Mitte. Dies hat den Vorteil, dass sich das innere Bauteil (2) leichter mit dem äußeren Bauteil (1) über besagte Federelemente (3) verspannen lassen, ohne dass dadurch die Dämpfungseigenschaften signifikant beeinflusst werden.

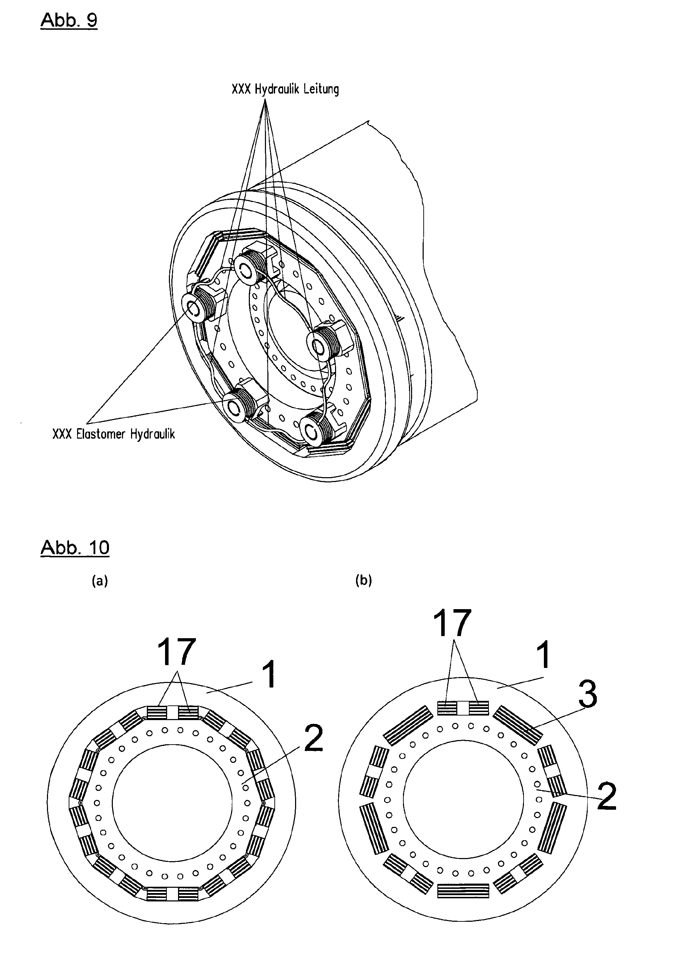

Abb. 8 und 9 zeigen weitere Ausführungsformen der Erfindung, bei denen Vorrichtungen eingesetzt werden, mit deren Hilfe die Schichtfederelemente (3) hydraulisch in ihrer Vorspannung eingestellt und reguliert werden können.

Abb. 10(b) zeigt eine Ausführungsform, bei der das erfindungsgemäße Lager aus regelmäßigen Zehnkanten-Bauteilen besteht, wobei die verbindenden Schichtfederelemente zwischen jeweils zwei Kantenflächen (1.1) (2.1) mittig unterteilt sind durch einen vorzugsweise axial ausgerichteten Trennraum oder Trennspalt. Während bei (a) sämtliche zehn Zwischenräume (16) mit solchen getrennten Schichtfederelementen ausgestattet sind, wechseln sich bei (b) durchgehende Elemente mit getrennten Elementen ab.

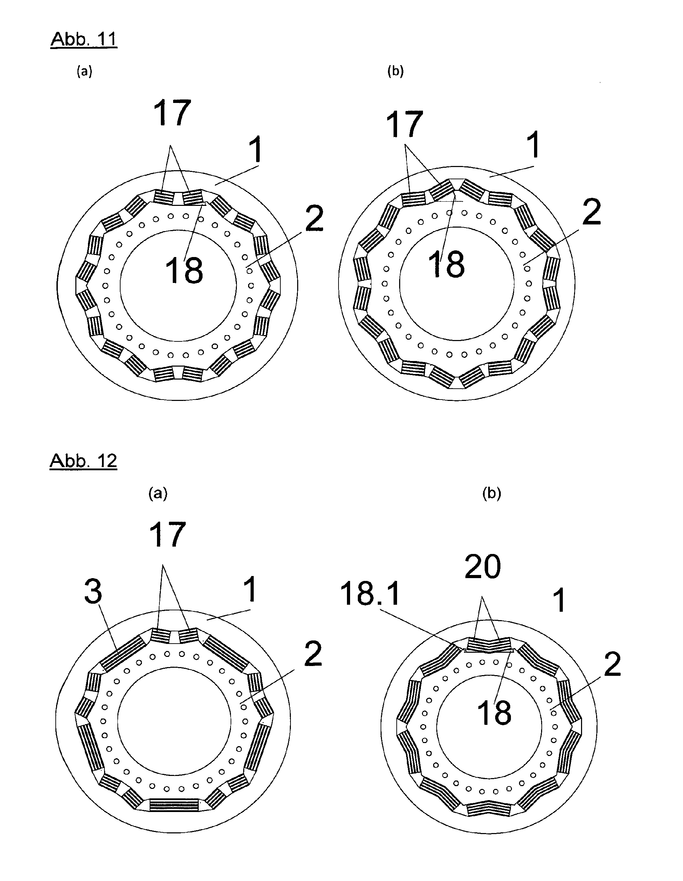

Abb. 11 und 12 zeigen erfindungsgemäße Ausführungsformen, bei denen das innere Bauteil (2) einem Zahnrad gleicht, und die Innenkontur des äußeren Bauteils (1) die entsprechende Form hat. Die Konturflächen (1.1) (2.1) sind hierbei noch vorzugsweise planar zueinander, weisen jedoch abwechselnd einen gelichgroßen Winkel auf der von 90° gegenüber dem Radius der Scheiben abweicht (vorzugsweise 1 - 45°).

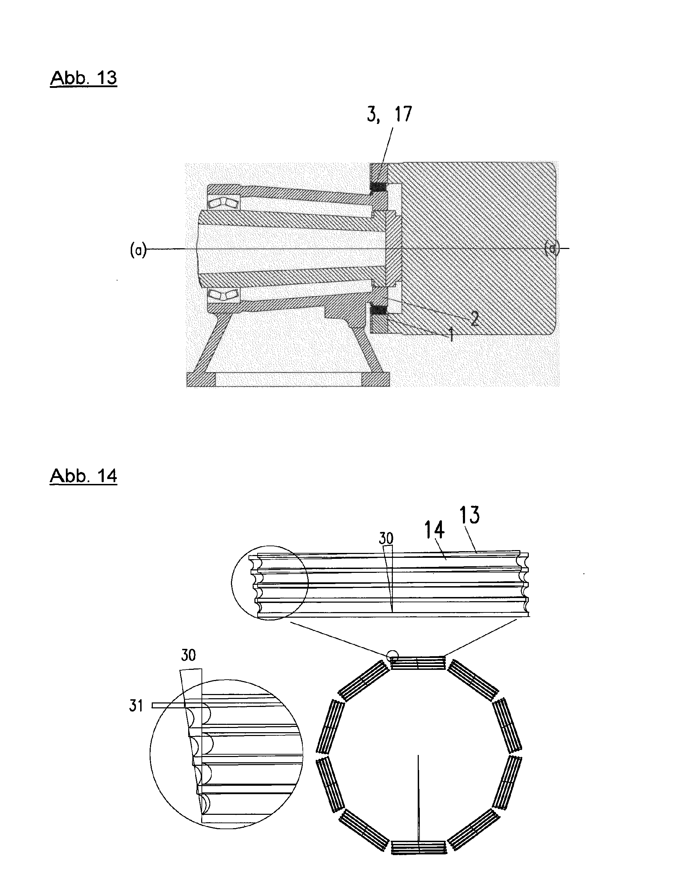

Abb. 13 stellt eine andere Sichtweise der Abb. 4 dar. Man sieht hier sehr deutlich wie das erfindungsgemäße Lager Getriebeblock und Antriebswelle (Rotorwelle) miteinander verbinden und für die torsionale Dämpfung dieser Anordnung sorgen.

Abb. 14 zeigt eine weitere Ausführungsform der Erfindung, bei der die Schichtfederelemente (3) einen rautenförmige Anordnung aufweisen, wobei also eine Schichtebene gegenüber der angrenzenden Schichtebene leicht versetzt ist. Hierdurch kann eine größere Variabilität in Bezug auf die Einstellung der Dämpfung erzielt werden.

## Patentansprüche

1. Elastisches Lager umfassend
(i) ein inneres scheibenförmiges Viel-Eck-Bauteil (2) mit einer konzentrisch angeordneten Öffnung zur Aufnahme einer Antriebswellenvorrichtung (21,24) deren Längsachse eine gedachte zentrale Achse (a) bildet, und einer mehrkantigen Außenkontur aus flachen Seitenkantenflächen (2.1),
(ii) eine äußeres Bauteil (1) mit scheibenförmigen Querschnitt und mit einer im Vergleich zum Außendurchmesser des inneren Bauteils (2) größeren konzentrisch angeordneten Öffnung, welche eine mehrkantige Innenkontur aus flachen Seitenkantenflächen (1.1) aufweist, wobei Anzahl, Geometrie und Anordnung der Seitenkantenflächen (1.1), im Wesentlichen denen der Außenkontur des inneren Bauteils (2) entsprechen, und
(iii) elastische Schicht- oder Sandwich-Federelemente (3), welche bezüglich Anzahl, Geometrie und Anordnung im Wesentlichen passend zur Anzahl, Geometrie und Anordnung der äußeren und inneren Seitenkantenflächen der Bauteile (1)(2) sind, und welche, bzw. deren ein oder mehrere Schichten, im Wesentlichen parallel zu den zugehörigen Seitenkantenflächen (1.1)(2.1) angeordnet sind, und die Schichtelemente eine Dicke aufweisen, die im Wesentlichen der Differenz des Innendurchmessers des Bauteils (1) und des Außendurchmessers des Bauteils (2) entspricht,
wobei das innere Vieleck-Scheibenteil (2) in die konzentrische Öffnung des äußeren Bauteils (1) so gesteckt und platziert ist, dass die Seitenkantenflächen (2.1) gegenüber den Seitenkantenflächen (1.1) angeordnet sind, welche in Bezug auf besagte konzentrische Öffnungen konzentrisch angeordnete Zwischenräume (16) zueinander bilden, in denen besagte Schichtfederelemente (3) passend untergebracht sind, und das äußere Bauteil (1) und das innere scheibenförmige Bauteil (2) über die elastischen Schichtfederelemente (3) gegeneinander in radialer Richtung verspannt sind.

2. Elastisches Lager nach Anspruch 1, **dadurch gekennzeichnet, dass** die Seitenkantenflächen (1.1) und (2.1) der Zwischenräume (16) im Wesentlichen planparallel zueinander angeordnet sind, ebenso wie die in besagte Zwischenräume eingebrachten Schichtfederelemente (3), oder eine der besagten Seitenkantenflächen einen Winkel in Richtung der Achse (a) gegenüber der gegenüberliegenden Seitenkantenfläche aufweist.

3. Elastisches Lager nach Anspruch 1 oder 2, **dadurch gekennzeichnet, dass** die Außenkontur des Bauteils (2) und die Innenkontur des Bauteils (1) jeweils ein vorzugsweise regelmäßiges Achteck, Neuneck, Zehneck, Elfeck oder Zwölfeck ist.

4. Elastisches Lager nach Anspruch 1 oder 2, **dadurch gekennzeichnet, dass** die Außenkontur des Bauteils (1) bildenden Seitenkantenflächen (1.1) und die die Innenkontur des Bauteils (2) bildenden Seitenkantenflächen (2.1) so angeordnet sind, dass sie abwechselnd jeweils einen Winkel (29) zwischen 1° und 45° zum Radius der ineinander gesteckten Bauteile (1) und (2) in der Weise aufweisen,dass die Konturen der Bauteile (1) und (2) einem Zahnrad mit einer Vielzahl von Zähnen entsprechen.

5. Elastisches Lager nach Anspruch 4 (ii), **dadurch gekennzeichnet, dass** ein Schichtfederelement (3) sich durchgehend über zwei hintereinander folgende Zähne der Bauteile (1) und (2) erstreckt.

6. Elastisches Lager nach einem der Ansprüche 1 - 4, **dadurch gekennzeichnet, dass** in dem Zwischenraum (16) ein einteiliges Schichtfederelement (3) angeordnet ist, welches im Wesentlichen den besagten Zwischenraum ausfüllt, oder zwei oder mehr Schichtelemente (3) vorliegen, die durch axial ausgerichtete Trennräume voneinander getrennt sind.

7. Elastisches Lager nach Anspruch 6, **dadurch gekennzeichnet, dass** sich auf den Konturen der Bauteile (1) und (2) ein mit einem durchgehenden Schichtfederelement (3) ausgestatteter Zwischenraum (16) mit einem mit einem unterteilten Schichtfederelement (3) ausgestatteten Zwischenraum (16) abwechselt.

8. Elastisches Lager nach einem der Ansprüche 1 - 7, **dadurch gekennzeichnet, dass** ein Schichtfederelement (3) in Richtung der gedachten Achse (a) gesehen
(i) mittig einseitig oder beidseitig eine Delle aufweist, so dass sie Dicke des Elements in der Delle geringer ist als an den Außenrändern, oder
(ii) sich durchgehend über zwei hintereinander folgende Zähne der Bauteile (1) und (2) erstreckt.

9. Elastisches Lager nach einem der Ansprüche 1 - 8, **dadurch gekennzeichnet, dass** einzelne oder alle Schichtfederelemente (3) einen rautenförmigen Querschnitt mit einen Anstellwinkel (30) gegenüber der jeweiligen Kante der Außenkontur des inneren Bauteils (2) aufweisen.

10. Elastisches Lager nach einem der Ansprüche 1 - 9, **dadurch gekennzeichnet, dass** das scheibenförmige innere Vieleck-Bauteil (2) und / oder das äußere Bauteil (1) Befestigungsvorrichtungen (27) aufweist, mit denen es fest mit einem axial angeordneten Getriebe oder Antrieb verbunden werden kann, wobei das äußere Bauteil (1) integraler Bestandteil eines Maschinenträgers (10) ist oder mit diesem fest verbunden ist.

11. Elastisches Lager nach einem der Ansprüche 1 - 10, **dadurch gekennzeichnet, dass** die elastischen Schichtfederelemente (3) entsprechend gestaltete Elemente und Vorrichtungen (15) aufweisen, mittels derer sie in die von den gegenüberliegenden Kantenflächen (1.1)(2.1) gebildeten Zwischenräumen (16) eingeschoben oder aus diesen herausgezogen werden können.

12. Elastisches Lager nach einem der Ansprüche 1 - 11, **dadurch gekennzeichnet, dass** die Schichtfederelemente (3) an der Kantenfläche mit der sie in die jeweiligen Zwischenräume (16) bei Montage eingeschoben werden eine Dicke aufweisen, die geringer ist als die Dicke des jeweiligen Zwischenraumes (16), und an der gegenüberliegenden Kantenfläche eine Dicke aufweisen, die größer als die Dicke des jeweiligen Zwischenraumes (16), so dass bei jeweils vollständig in den jeweiligen Zwischenraum eingeschobenen Schichtfederelement eine Vorspannung desselben erzielt wird.

13. Elastisches Lager nach Anspruch 1 - 12, **dadurch gekennzeichnet, dass** die Zwischenräume (16) auf der Seite von welcher die Schichtfederelemente (3) bei Montage eingeschoben werden, eine größere Dicke aufweisen als auf der gegenüberliegenden Seite, so dass bei jeweils vollständig in den jeweiligen Zwischenraum eingeschobenen Schichtfederelement eine Vorspannung desselben erzielt wird.

14. Elastisches Lager nach einem der Ansprüche 1 - 13, **dadurch gekennzeichnet, dass** die Seitenkantenflächen (1.1)(2.1) der Bauteile (1) und (2), die die Zwischenräume (16) für die Schichtfederelemente (3) bilden,
(i) parallel zu der gedachten zentralen Achse (a) des Lagers ausgerichtet sind, oder
(ii) einen Winkel (28) zwischen 2 - 10° mit der gedachten zentralen Achse (a) des Lagers bilden ebenso wie die in besagte Zwischenräume eingeführten Schichtfederelemente (3).

15. Elastisches Lager nach einem der Ansprüche 1 - 14, **dadurch gekennzeichnet, dass** es zusätzlich mindestens zwei Schichtfederelemente (31) am Umfang des inneren Bauteils (2) aufweist, welche über einen Flansch (37) mit dem Maschineträger (10) oder mit dem äußeren Bauteil (1) fest verbunden sind, und die Schichtfederelemente (31) Mittel zur Kraftübertragung (35) und Vorspannung (36, 38, 39) aufweisen, mit welchen das innere Bauteil (2) gegen den Maschinenträger (10) bzw. gegen das äußere Bauteil (1) in Richtung der gedachten Achse (a) axial verspannt werden kann.

16. Elastisches Lager nach einem der Ansprüche 1 - 15, **dadurch gekennzeichnet, dass** die einzelne oder mehrere Schichtfederelemente (3) und (31) mit hydraulischen Mitteln und Vorrichtungen versehen sind, die eine adaptive Vorspannung der Elemente ermöglichen.

17. Verwendung eines Lagers nach einem der Ansprüche 1 - 16 zur Dämpfung und Reduzierung torsionaler Kräfte und Schwingungen, welche begleitet sind von
(i) Körperschall, und / oder
(ii) Nick- und Gierbewegungen und / oder
(iii) Schubkräften.

18. Windkraftanlage, **dadurch gekennzeichnet, dass** sie ein elastisches Lager nach einem der Ansprüche 1 - 16 aufweist.
